# EUROPÄISCHE PATENTSCHRIFT

(11) **EP 3 690 347 B1**
(45) Veröffentlichungstag und Bekanntmachung des Hinweises auf die Patenterteilung: **27.05.2026**
(21) Anmeldenummer: 19154638.1
(22) Anmeldetag: 30.01.2019
(51) Int. Cl.: F24S 25/634, H02S 20/22

(54) **TRAGVORRICHTUNG FÜR EIN SOLARMODUL UND VERFAHREN ZUR HERSTELLUNG**
SUPPORTING DEVICE FOR A SOLAR MODULE AND METHOD FOR MANUFACTURING
DISPOSITIF DE SUPPORT POUR UN MODULE SOLAIRE ET PROCÉDÉ DE FABRICATION

(43) Veröffentlichungstag der Anmeldung: 05.08.2020
(73) Patentinhaber: Energiewendeplaner GmbH, 85356 Freising (DE)
(72) Erfinder: Horn, Andreas, 85737 Ismaning (DE)
(74) Vertreter: Dilg, Haeusler, Schindelmann Patentanwaltsgesellschaft mbH

(56) Entgegenhaltungen:
- EP-A1- 2 924 365
- WO-A1-2010/113003
- WO-A1-2018/069333
- DE-A1- 102005 033 545
- DE-A1- 102007 000 697
- DE-A1- 102010 014 273
- DE-A1- 102012 208 107
- DE-A1- 102014 007 971
- DE-B3- 102012 105 072
- DE-U1- 202009 010 984
- DE-U1- 202010 017 458
- DE-U1- 202011 005 202
- US-A1- 2016 373 052
- US-A1- 2019 013 768

## Beschreibung

### GEBIET DER ERFINDUNG

Die vorliegende Erfindung betrifft das Gebiet der Solaranlagen.

### HINTERGRUND

WO 2010/0108288 A2 beschreibt eine Anordnung für die Befestigung von mehreren Solarmodulen zur Bildung eines Solarfeldes auf einem Gebäudedach oder einer Gebäudefassade, umfassend mehrere Trägerprofile, die beabstandet voneinander in Reihen angeordnet sind und jeweils ein oder mehrere Klammerelemente tragen, zur Befestigung der Solarmodule auf den Trägerprofilen. Die Klammerelemente sind derartig ausgebildet, dass mit jedem Klammerelement jeweils zwei benachbarte Solarmodule auf dem das Klammerelement tragenden Trägerprofil befestigbar sind, indem die sich gegenüberliegenden und quer zum Trägerprofil verlaufenden Begrenzungskanten der beiden Solarmodule, welche beidseitig an das Klammerelement angrenzen, vom Klammerelement übergriffen werden und dadurch formschlüssig gegen ein Abheben vom Trägerprofil gesichert werden. Die Klammerelemente umfassen jeweils ein Stegelement zur Anordnung zwischen den Begrenzungskanten der Solarmodule und ein separat vom Stegelement ausgebildetes Kopfelement zum Übergreifen der Begrenzungskanten der Solarmodule. Die Stegelemente sind als Profilabschnitte ausgebildet und sind jeweils mit ihrer Profillängsrichtung orientiert in Längsrichtung des sie tragenden Trägerprofils an ihren unteren Enden formschlüssig am jeweiligen Trägerprofil befestigt, indem sie jeweils mit von diesen gebildeten Profilkonturen in Profilabschnitte des Trägerprofils eingreifen und/oder Profilabschnitte des Trägerprofils umgreifen. Die Kopfelemente sind im Bereich des oberen Endes des jeweils zugehörigen Stegelements formschlüssig an diesem Stegelement befestigt, indem sie jeweils in Profillängsrichtung des Stegelements in und/oder auf Konturen des Stegelements ein- und/oder aufgeschoben sind und dabei in Längsrichtung des Stegelements beidseitig über das Stegelement überstehen, zum Übergreifen der Begrenzungskanten der zu befestigenden Solarmodule.

DE 20 2010 017458 U1 offenbart eine Profilschiene, ein Halteelement und eine damit gebildete Solarmodulanordnung, insbesondere für eine Quermontage von Solarmodulen.

DE 20 2011 005202 U1 offenbart ein Profilelement zur Befestigung von Solarmodulen.

EP 2924365 A1 offenbart ein Profil zum Stützen eines Solarpanels.

DE 20 2009 01 0984 U1 betrifft ein Verankerungselement zur Verankerung eines Trägerelements für einen Flächenkörper, insbesondere ein Solarkollektor oder ein Solarmodul, auf zumindest einer profilierten Dachplatte. Die profilierte Dachplatte kann beispielsweise mit einem wellenförmigen Profil oder einem trapezförmigen Profil versehen sein. Ferner kann die Dachplatte aus Faserzement bestehen.

WO 2018/069333 A1 offenbart ein Fotovoltaikelement, welches ein Fotovoltaikkonverterpanel und mindestens eine Montageanordnung aufweist. Die mindestens eine Montageanordnung ist als Platte ausgebildet, insbesondere als einstückige Platte, insbesondere gefertigt aus Metall und/oder Plastik. Die mindestens eine Montageanordnung kann eines oder mehrere der folgenden Materialien aufweisend: Metall, Keramik, Plastik, Zement, insbesondere Faserzement.

WO 2010/113003 A1 betrifft ein System zum Fixieren eines Fotovoltaikmoduls auf einem Abdeck-Mauerdach von Gebäuden, insbesondere von einem Boxprofil oder gewelltem Blechtyp, jedoch auch gefertigt aus Asbestzement, Verbundharz, Zement, Fliesen oder dergleichen.

DE 10 2007 000 697 A1 offenbart, dass eine rückseitige Stütze und/oder eine vorderseitige Aufnahme für den Solarkollektor an ihren unteren Enden jeweils ein nach hinten bzw. nach vorne gerichtetes Unterteil zur Auflage auf einer Unterlage aufweisen und mit dem zugehörigen Unterteil gelenkig verbunden sind, wobei mindestens eines der Unterteile rinnen- oder wannenförmig zur Aufnahme von Ballast ausgebildet ist.

DE 10 2005 033 545 A1 beschreibt, dass bei einem bekannten Schwerlastverfahren Betonsockel oder Betonplatten ohne weitere Befestigung auf das Flachdach gestellt und an diesen ein Montagegestell für Solarelemente mit Schraubankern befestigt wurde und dass anstelle von Betonplatten leichte Wannen aus UV-beständigem Kunststoff oder Faserzement verwendet wurden, die auf dem Flachdach mit Gehwegplatten oder Kies gefüllt werden.

US 2016/0373052 A1 offenbart eine Solarfeld-Trägerstruktur mit vertikalen Stützsäulen, die in den Boden eingelassen sind, so dass die Solarfeld-Trägerstruktur darin befestigt ist.

DE 10 2012 208 107 A1 offenbart eine Vorrichtung mit einem Dachtragwerk, welches aus mindestens zwei Längsträgern gebildet wird, wobei jeder Längsträger mit den oberen Enden zweier seitlicher Stützen verbunden ist.

US 2019/0013768 A1 offenbart eine Solarenergieanlage für Schiffsdocks, wobei eine Teleskopstütze mehrere Abschnitte umfassen kann, wobei ein erster Teleskopabschnitt verschiebbar in einem zweiten Teleskopabschnitt sitzt, der verschiebbar in einem dritten Teleskopabschnitt sitzt.

### ZUSAMMENFASSUNG

Angesichts der oben beschriebenen Situation gibt es ein Bedürfnis für eine Technik, welche eine verbesserte Befestigung von mindestens einem Solarmodul erlaubt, während eines oder mehrere der oben angegebenen bzw. ersichtlichen Probleme vermieden oder zumindest abgeschwächt werden.

Diesem Bedürfnis wird durch die unabhängigen Patentansprüche Rechnung getragen, welche die beanspruchte Erfindung definieren. Vorteilhafte Ausführungsformen sind in den abhängigen Patentansprüchen angegeben. Weitere Ausführungsformen, die nicht als obligatorische Merkmale in den unabhängigen Ansprüchen enthalten sind, sind optionale Merkmale des beanspruchten Gegenstands. Sollten Teile der nachstehenden Beschreibung mit dem Gegenstand eines unabhängigen Anspruchs unvereinbar sein, so sind diese Teile keine Ausführungsformen des betreffenden beanspruchten Gegenstands, sondern dienen lediglich dem besseren Verständnis der Ausführungsformen der unabhängigen Ansprüche.

Gemäß einem ersten Aspekt der hierin offenbarten Gegenstände wird eine Haltevorrichtung bereitgestellt.

Gemäß einer Ausführungsform des ersten Aspektes wird eine Haltevorrichtung zum Montieren von mindestens einem Solarmodul an einem Träger bereitgestellt, die Haltevorrichtung aufweisend: eine erste Oberfläche und eine zweite Oberfläche, wobei die erste Oberfläche und die zweite Oberfläche voneinander abgewandt sind; eine erste Anschlagfläche, welche an dem Träger positionierbar ist, wobei der Träger der ersten Oberfläche gegenüber liegt und; eine zweite Anschlagfläche, an welcher ein Solarmodul positionierbar ist, wobei das Solarmodul der zweiten Oberfläche gegenüber liegt.

Gemäß einem zweiten Aspekt der hierin offenbarten Gegenstände wird ein Montagesystem für ein Solarmodul bereitgestellt.

Gemäß einer Ausführungsform des zweiten Aspektes wird ein Montagesystem für ein Solarmodul bereitgestellt, das Montagesystem aufweisend: einen ersten Träger; und mindestens eine Haltevorrichtung gemäß dem ersten Aspekt oder einer Ausführungsform hiervon, welche an dem ersten Träger positionierbar ist.

Gemäß einem dritten Aspekt der hierin offenbarten Gegenstände wird ein Verfahren zum Montieren eines Solarmoduls an einem Montagesystem bereitgestellt.

Gemäß einer Ausführungsform des dritten Aspektes wird ein Verfahren zum Montieren eines Solarmoduls an einem Montagesystem gemäß dem zweiten Aspekt oder einer Ausführungsform hiervon bereitgestellt, das Verfahren aufweisend: Positionieren der Haltevorrichtung an dem ersten Träger, so dass die erste Anschlagfläche der Haltevorrichtung an dem ersten Träger positioniert ist und der erste Träger der ersten Oberfläche der Haltevorrichtung gegenüberliegt.

Gemäß einem vierten Aspekt der hierin offenbarten Gegenstände wird eine Tragvorrichtung für mindestens ein Solarmodul bereitgestellt, die Tragvorrichtung aufweisend: mindestens eine Faserzementplatte; mindestens einen Träger, der an der

Faserzementplatte befestigt ist, wobei an dem Träger mindestens ein Solarmodul positionierbar ist; insbesondere wobei die mindestens eine Faserzementplatte ausgebildet ist, um ein Schüttgut aufzunehmen.

Gemäß einem fünften Aspekt der hierin offenbarten Gegenstände wird eine Solaranlage bereitgestellt.

Gemäß einer Ausführungsform des fünften Aspektes wird eine Solaranlage bereitgestellt, die Solaranlage aufweisend: eine Tragvorrichtung gemäß dem vierten Aspekt oder einer Ausführungsform hiervon; eine Haltevorrichtung gemäß dem ersten Aspekt oder einer Ausführungsform hiervon; mindestens ein Solarmodul, welches an der zweiten Anschlagfläche der Haltevorrichtung positioniert ist.

Gemäß Ausführungsformen des ersten Aspektes ist die Haltevorrichtung eingerichtet zum Liefern der Funktionalität von einem oder mehreren der vorstehend genannten Ausführungsformen und/oder zum Liefern der Funktionalität, wie sie für eine oder mehrere der vorstehend genannten Ausführungsformen, insbesondere der Ausführungsformen des ersten, zweiten, dritten, vierten und/oder fünften Aspektes erforderlich ist.

Gemäß Ausführungsformen des zweiten Aspektes ist das Montagesystem eingerichtet zum Liefern der Funktionalität von einem oder mehreren der vorstehend genannten Ausführungsformen und/oder zum Liefern der Funktionalität, wie sie für eine oder mehrere der vorstehend genannten Ausführungsformen, insbesondere der Ausführungsformen des ersten, zweiten, dritten, vierten und/oder fünften Aspektes erforderlich ist.

Gemäß Ausführungsformen des dritten Aspektes ist das Verfahren eingerichtet zum Liefern der Funktionalität von einem oder mehreren der vorstehend genannten Ausführungsformen und/oder zum Liefern der Funktionalität, wie sie für eine oder mehrere der vorstehend genannten Ausführungsformen, insbesondere der Ausführungsformen des ersten, zweiten, dritten, vierten und/oder fünften Aspektes erforderlich ist.

Gemäß Ausführungsformen des vierten Aspektes ist die Tragvorrichtung eingerichtet zum Liefern der Funktionalität von einem oder mehreren der vorstehend genannten Ausführungsformen und/oder zum Liefern der Funktionalität, wie sie für eine oder mehrere der vorstehend genannten Ausführungsformen, insbesondere der Ausführungsformen des ersten, zweiten, dritten, vierten und/oder fünften Aspektes erforderlich ist.

Gemäß Ausführungsformen des fünften Aspektes ist die Solaranlage eingerichtet zum Liefern der Funktionalität von einem oder mehreren der vorstehend genannten Ausführungsformen und/oder zum Liefern der Funktionalität, wie sie für eine oder mehrere der vorstehend genannten Ausführungsformen, insbesondere der Ausführungsformen des ersten, zweiten, dritten, vierten und/oder fünften Aspektes erforderlich ist.

### BESCHREIBUNG EXEMPLARISCHER AUSFÜHRUNGSFORMEN

Gemäß einer Ausführungsform der hierin offenbarten Gegenstände wird eine Haltevorrichtung zum Montieren von mindestens einem Solarmodul an einem Träger bereitgestellt. Die Haltevorrichtung weist gemäß einer Ausführungsform eine erste Oberfläche und eine zweite Oberfläche auf, wobei die erste Oberfläche und die zweite Oberfläche voneinander abgewandt sind. Ferner weist die Haltevorrichtung gemäß einer Ausführungsform eine erste Anschlagfläche auf, welche an dem Träger positionierbar ist, wobei der Träger der ersten Oberfläche gegenüber liegt. Ferner weist die Haltevorrichtung gemäß einer Ausführungsform eine zweite Anschlagfläche auf, an welcher ein Solarmodul positionierbar ist, wobei das Solarmodul der zweiten Oberfläche gegenüber liegt.

Aspekte und Ausführungsformen der hierin offenbarten Gegenstände basieren auf der Idee, dass die Montage von mindestens einem Solarmodul verbessert werden kann in dem eine Haltevorrichtung verwendet wird, an welcher ein Träger und ein Solarmodul an voneinander abgewandten Oberflächen angeordnet werden (anordenbar sind).

Gemäß einer weiteren Ausführungsform ist der Träger ein längliches Element, beispielsweise ein Strangprofil oder ein Rohr. Ein Träger in Form eines Rohres, welches beispielsweise einen runden Querschnitt oder einen eckigen Querschnitt aufweisen kann, kann beispielsweise auch als Modultragrohr bezeichnet werden. Gemäß einer Ausführungsform ist der Träger ein Rechteckrohr, d. h. ein Rohr mit rechteckigem Querschnitt.

Hierin wird der Ausdruck "gegenüber liegen" synonym mit dem Ausdruck "zugewandt angeordnet" verwendet. Ferner schließt der Ausdruck "gegenüber liegen" gemäß einer Ausführungsform ein "in Kontakt stehen" mit ein. Beispielsweise umfasst das Merkmal "wobei der Träger der ersten Oberfläche gegenüberliegt" insbesondere die Bedeutung "wobei der Träger der ersten Oberfläche zugewandt angeordnet ist" als auch das die Bedeutung "wobei der Träger mit der ersten Oberfläche in Kontakt steht".

Gemäß einer Ausführungsform ist die Haltevorrichtung ausgebildet, um zwischen zwei Solarmodulen angeordnet zu werden. In diesem Fall wird die Haltevorrichtung auch als Modulmittelklemme bezeichnet.

Gemäß einer Ausführungsform weist die Haltevorrichtung eine dritte Anschlagfläche auf, an welcher ein weiteres Solarmodul positionierbar ist, wobei das weitere Solarmodul der ersten Oberfläche gegenüber liegt. Folglich erstreckt sich gemäß einer Ausführungsform die erste Oberfläche und die zweite Oberfläche der Haltevorrichtung zwischen zwei Solarmodulen.

Gemäß einer Ausführungsform weist die Haltevorrichtung ein Basiselement auf, welches die erste Oberfläche und die zweite Oberfläche aufweist. Gemäß einer Ausführungsform sind die zweite Anschlagfläche und die dritte Anschlagfläche von einem Anschlagelement gebildet, welches an dem Basiselement befestigbar ist.

Gemäß einer weiteren Ausführungsform ist das Basiselement ein plattenförmiges Basiselement. Beispielsweise ist das Basiselement gemäß einer Ausführungsform aus einer Metallplatte, beispielsweise einer Platte aus Edelstahl, Aluminium oder Stahl, gebildet. Gemäß einer Ausführungsform ist eine Anschlagfläche, die von dem Basiselement gebildet ist, durch einen Vorsprung gebildet, der beispielsweise durch Verformen eines plastisch deformierbares Elementes (beispielsweise heraus Biegen einer Lasche aus der Plattenebene des plattenförmiges Basiselements) gebildet ist.

Gemäß einer Ausführungsform weist das Anschlagelement ein Oberflächenprofil auf, welches mit einem entsprechenden Oberflächenprofil an einem Solarmodul zusammenpasst, um das Solarmodul an dem Anschlagelement zu fixieren (beispielsweise um ein Abrutschen des Solarmoduls von dem Anschlagelement zu verhindern). Ein Oberflächenprofil kann hierbei beispielsweise einen Vorsprung an einem der Elemente Oberflächenprofil und Solarmodul und eine Vertiefung an dem anderen der Elemente Oberflächenprofil und Solarmodul aufweisen. Beispielsweise kann vorgesehen sein, dass das Anschlagelement einen Vorsprung aufweist, welcher in eine Vertiefung in dem Solarmodul eingreift. Gemäß einer Ausführungsform kann der Vorsprung während der Montage erzeugt werden. Beispielsweise kann das Anschlagelement verformbare Abschnitte aufweisen, die verformbar sind, um das Oberflächenprofil zu erzeugen. Ein verformbarer Abschnitt kann beispielsweise eine Lasche sein, die aus der Ebene der Anschlagfläche heraus biegbar ist.

Gemäß einer Ausführungsform weist die Haltevorrichtung eine vierte Anschlagfläche auf, wobei die vierte Anschlagfläche der ersten Anschlagfläche gegenüber liegt und der Träger zwischen der ersten Anschlagfläche und der vierten Anschlagfläche positionierbar ist. Mit anderen Worten weisen gemäß einer Ausführungsform die dritte Anschlagfläche und die vierte Anschlagfläche in entgegengesetzte Richtungen.

Gemäß einer Ausführungsform weist das Anschlagelement die vierte Anschlagfläche auf. Mit anderen Worten ist gemäß einer Ausführungsform die vierte Anschlagfläche von dem Anschlagelement gebildet. Beispielsweise ist gemäß einer weiteren Ausführungsform das Anschlagelement plattenförmig ausgebildet, wobei die dritte Anschlagfläche und die vierte Anschlagfläche jeweils von einer Hauptoberfläche des plattenförmigen Anschlagelements gebildet sind.

Gemäß einer weiteren Ausführungsform ist die vierte Anschlagfläche mit Abstand von dem Anschlagelement angeordnet. Beispielsweise ist gemäß einer Ausführungsform die vierte Anschlagfläche von dem Basiselement gebildet, beispielsweise von einer abgewinkelten Lasche des Basiselements.

Gemäß einer Ausführungsform ist der Träger zwischen der ersten Anschlagfläche und der vierten Anschlagfläche angeordnet.

Gemäß einer weiteren Ausführungsform weist die Haltevorrichtung eine fünfte Anschlagfläche auf, welche der dritten Anschlagfläche gegenüberliegt und welche mit Abstand von der dritten Anschlagfläche angeordnet ist, wobei sich das weitere Solarmodul zwischen der dritten Anschlagfläche und der fünften Anschlagfläche erstreckt. Gemäß einer Ausführungsform ist das weitere Solarmodul durch die dritte Anschlagfläche und die fünfte Anschlagfläche in vertikaler Richtung fixiert.

Gemäß einer Ausführungsform weist die Haltevorrichtung ferner eine sechste Anschlagfläche auf, welche der zweiten Anschlagfläche gegenüberliegt und welche mit Abstand von der zweiten Anschlagfläche angeordnet ist, wobei sich das Solarmodul zwischen der zweiten Anschlagfläche und der sechsten Anschlagfläche erstreckt. Gemäß einer Ausführungsform ist das Solarmodul durch die zweite Anschlagfläche und die sechste Anschlagfläche in vertikaler Richtung fixiert.

Gemäß einer Ausführungsform sind die fünfte Anschlagfläche und die sechste Anschlagfläche von einem weiteren Anschlagelement gebildet. Gemäß einer Ausführungsform ist das weitere Anschlagelement auf das Basiselement aufsteckbar.

Gemäß einer Ausführungsform ist ein hierin beschriebenes Anschlagelement (beispielsweise das Anschlagelement und/oder das weitere Anschlagelement) mit dem Basiselement verrastbar. Hierzu kann das Anschlagelement oder das weitere Anschlagelement ein erstes Rastelement aufweisen und das Basiselement kann ein zweites Rastelement aufweisen, welches mit dem ersten Rastelement zusammen wirkt, zum Verrasten des Anschlagelements (oder des weiteren Anschlagelement) mit dem Basiselement. Ein Rastelement (erstes Rastelement oder zweites Rastelement) kann beispielsweise ein Vorsprung, ein Haken, eine Rastnase, eine Vertiefung, ein Durchbruch, etc. sein. Gemäß einer Ausführungsform ist ein Sicherungselement (beispielsweise ein Sicherungsstift) vorgesehen, mit welchem die Verrastung gesichert werden kann.

Gemäß einer Ausführungsform weist das Basiselement an einem Ende, welches mit Abstand von der ersten Anschlagfläche angeordnet ist, mindestens eine Rastnase auf, über welche das weitere Anschlagelement auf das Basiselement aufsteckbar ist und durch quer Verschieben des weiteren Anschlagelements bezüglich des Basiselements mit dem Basiselement verrastbar ist.

Gemäß einer Ausführungsform weist mindestens eine der Anschlagflächen ein plastisch deformierbares Element auf zum Fixieren eines an der betreffenden Anschlagfläche angeordneten Bauteils. Das Bauteil kann beispielsweise der Träger, das Solarmodul oder das weitere Solarmodul sein, um nur einige Beispiele zu nennen. Der Begriff "Fixieren" bedeutet gemäß einer Ausführungsform in diesem Zusammenhang und generell hierin ein Fixieren in mindestens einer Richtung, sofern nichts anderes angegeben ist.

Gemäß einer Ausführungsform sind das Anschlagelement und das Basiselement ineinander steckbar zum Herstellen einer Steckverbindung zwischen dem Anschlagelement und dem Basiselement. Gemäß einer weiteren Ausführungsform ist das Anschlagelement auf das Basiselement aufsteckbar. Gemäß einer Ausführungsform weist die Steckverbindung mindestens ein Fixierelement auf zum Fixieren der Steckverbindung. Gemäß einer weiteren Ausführungsform ist das Fixierelement ein plastisch deformierbares Element. Gemäß einer weiteren Ausführungsform ist das Fixierelement ein Sicherungselement, beispielsweise ein Sicherungsstift.

Gemäß einer Ausführungsform weist ein Montagesystem für ein Solarmodul einen (ersten) Träger und mindestens eine Haltevorrichtung gemäß Ausführungsformen der hierin offenbarten Gegenstände auf, welche an dem Träger positionierbar ist (oder positioniert ist).

Gemäß einer weiteren Ausführungsform weist das Montagesystem einen zweiten Träger auf, sowie einen Randhalter, welcher eine erste Anschlagfläche aufweist, die an dem zweiten Träger positionierbar ist. Gemäß einer weiteren Ausführungsform weist der Randhalter eine zweite Anschlagfläche auf, wobei das Solarmodul an der zweiten Anschlagfläche der Haltevorrichtung und der zweiten Anschlagfläche des Randhalters positionierbar ist zum Tragen des Solarmoduls durch die zweite Anschlagfläche der Haltevorrichtung und die zweite Anschlagfläche des Randhalters.

Gemäß einer Ausführungsform weist der Randhalters ein Basiselement und ein Anschlagelement auf, und die zweite Anschlagfläche des Randhalters ist durch das Anschlagelement des Randhalters gebildet. Beispielsweise können die Elemente Anschlagelement und Basiselement (des Randhalters) ineinander aufsteckbar ausgebildet sein zum Herstellen einer Steckverbindung zwischen dem Anschlagelement des Randhalters und dem Basiselement des Randhalters.

Gemäß einer Ausführungsform der hierin offenbarten Gegenstände weist ein Verfahren zum Montieren eines Solarmoduls an dem Montagesystem ein Positionieren der Haltevorrichtung an dem ersten Träger auf, so, dass die erste Anschlagfläche der Haltevorrichtung an dem ersten Träger positioniert ist und der erste Träger der ersten Oberfläche der Haltevorrichtung gegenüberliegt.

Generell hierin kann "Positionieren" lediglich ein Positionieren oder, gemäß anderer Ausführungsform, ein Positionieren und Fixieren (Befestigen) umfassen.

Gemäß einer Ausführungsform weist das Verfahren ferner auf: Positionieren des Randhalters an dem zweiten Träger, so dass die erste Anschlagfläche des Randhalters an dem zweiten Träger positioniert ist; und Positionieren des Solarmoduls auf der zweiten Anschlagfläche der Haltevorrichtung und der zweiten Anschlagfläche des Randhalters.

Es versteht sich, dass ein Solarmodul auch auf den zweiten Anschlagflächen von zwei benachbarten Haltevorrichtungen (insbesondere zwischen zwei benachbarten Mittelklemmen) angeordnet werden kann.

Gemäß einer Ausführungsform der hierin offenbarten Gegenstände weist eine Tragvorrichtung für mindestens ein Solarmodul insbesondere die folgenden Merkmale auf: mindestens eine Faserzementplatte; mindestens einen Träger, der an der Faserzementplatte befestigt ist, wobei an dem Träger mindestens ein Solarmodul positionierbar ist.

Gemäß einer Ausführungsform ist die mindestens eine Faserzementplatte ausgebildet, um ein Schüttgut (beispielsweise Kies) aufzunehmen. Gemäß einer Ausführungsform ist die Faserzementplatte eine Faserzement-Wellplatte. Durch die Wellenform kann die mechanische Stabilität verbessert sein.

Gemäß einer Ausführungsform der hierin offenbarten Gegenstände weist eine Solaranlage folgendes auf: eine Tragvorrichtung gemäß Ausführungsformen der hierin offenbarten Gegenstände; eine Haltevorrichtung gemäß Ausführungsformen der hierin offenbarten Gegenstände; und mindestens ein Solarmodul, welches an der zweiten Anschlagfläche der Haltevorrichtung positioniert ist.

Hinsichtlich der Nummerierung der Flächen (beispielsweise der Oberflächen oder der Anschlagflächen) wird angemerkt, dass die hierin verwendete Nummerierung lediglich der Reihenfolge der Erwähnung der entsprechenden Flächen entspricht und darüber hinaus keine Einschränkung liefert. Daher kann bei bestimmten Merkmalskombinationen die Nummerierung abgeändert werden, um der Reihenfolge der Erwähnung der entsprechenden Merkmale Rechnung zu tragen. Eine solche Änderung der Nummerierung hat keinen Einfluss auf den Offenbarungsgehalt und liegt daher im Umfang der vorliegenden Anmeldung.

Ausführungsformen der hierin offenbarten Gegenstände können eine höhere Anlagenleistung erreichen durch bessere Flächenausnutzung. Pflegeaufwand infolge von Verschmutzung und Verschattung, insbesondere bei Nutzungskonkurrenz mit Dachbegrünung, aber auch Wildwuchs von Flugsamen etc. kann reduziert werden durch die bessere Flächenausnutzung gemäß Ausführungsformen der hierin offenbarten Gegenstände. Insbesondere durch eine plattenförmige Gestaltung eines Basiselements kann ein Abstand zwischen Solarmodulen gegenüber konventionellen Lösungen vermindert werden. Gemäß einigen Ausführungsformen der hierin offenbarten Gegenstände kann eine ansprechende Optik der Anlagen durch ruhige und plan ausgerichtete Modulflächen erzielt werden. Gemäß Ausführungsformen der hierin offenbarten Gegenstände ist die Unterkonstruktion einer Solaranlage, insbesondere die Haltevorrichtungen und Montagesysteme auch in kleinen Stückzahlen und im Wesentlichen ohne große Investitionskosten wie beispielsweise Formenbau etc. herstellbar. Gemäß Ausführungsformen der hierin offenbarten Gegenstände können viele Standardbauteile, Standard-Halbzeuge und Standard-Rohmaterial eingesetzt werden. Ferner wird ein geringer Energieaufwand für die Herstellung der Unterkonstruktion benötigt. Gemäß einer Ausführungsform wird die Montage der Solarmodule hochkant durchgeführt, d. h. die Module werden mit ihrer größeren Längserstreckung in Richtung der Schräge ausgerichtet. Gemäß einer Ausführungsform werden die Module im statisch tragfähigsten Bereich (Randeinstand ca. 1/4 der Modullänge) befestigt. Gemäß einer weiteren Ausführungsform werden als Träger Standard-Stahl-Rechteckrohre entlang der Längsseiten der Module verwendet. Hierdurch ergibt sich eine minimale Schienenlänge, um einen optimalen Befestigungspunkt nutzen zu können. Gemäß einer Ausführungsform werden teleskoptierbare Rundrohre als Stützen verwendet. Gemäß einer weiteren Ausführungsform wird eine Dachschüttung vollflächig als Ballast für die Solaranlage verwendet. Gemäß einer weiteren Ausführungsform erfolgt die Einbringung von Platten oder Wannen, insbesondere aus Faserzement, die den Ballast tragen. Gemäß einer Ausführungsform werden die Platten oder Wannen auf eine Basis der Stützen, beispielsweise linienförmige Fußwinkel, aufgelegt. Mit der Unterkonstruktion gemäß Ausführungsformen der hierin offenbarten Gegenstände kann eine Berücksichtigung der Unebenheiten des gegebenen Untergrunds (beispielsweise eine trichterförmig Entwässerung der Dachoberfläche, bauseits hergestellt beispielsweise mit Dämmstoffteilen) erfolgen. Durch die gute Höhenanpassbarkeit gemäß Ausführungsformen der hierin offenbarten Gegenstände ergibt sich eine weitgehende Versetzbarkeit von Stützen und Fußwinkeln, um Dachaufbauten (zum Beispiel Entlüfter) umgehen bzw. überbauen zu können.

Eine Haltevorrichtung gemäß Ausführungsformen der hierin offenbarten Gegenstände kann die folgenden Vorteile aufweisen: durch das weitere Anschlagelement, welches gemäß einer Ausführungsform als Anpressplatte wirkt, und die erste Anschlagfläche werden Zugkräfte (Windsog) vom Solarmodul in die Unterkonstruktion übertragen. Gemäß einer Ausführungsform besteht das weitere Anschlagelement aus einer flachen Platte, welche in Haltenasen eines Basiselements eingerastet wird. Gemäß einer Ausführungsform liegen auf dem Anschlagelement die Solarmodule auf, wobei Druckkräfte vom Solarmodul zumindest teilweise über das Anschlagelement in die Unterkonstruktion übertragen werden. Durch Fixierelemente kann die Montage der Haltevorrichtung erleichtert werden. Gemäß einer Ausführungsform wird die Haltevorrichtung bzw. das Basiselement seitlich neben dem Träger angebracht, wobei gemäß einer weiteren Ausführungsform jeweils ein Modul seitlich bündig über dem Träger aufliegt. Gemäß einer Ausführungsform weist die Haltevorrichtung ein Fixierelement (beispielsweise eine Bohrung für ein Befestigungsmittel wie beispielsweise eine Schraube) auf, mit der ein Verrutschen der Haltevorrichtung entlang des Trägers blockiert werden kann. Gemäß einer weiteren Ausführungsform weist das Anschlagelement Laschen auf, die aus der Plattenebene herausgebogen ein Abrutschen des Solarmoduls weg von der Haltevorrichtung und parallel zu der Haltevorrichtung verhindern. Gemäß einer weiteren Ausführungsform kann nach der Montage des weiteren Anschlagelements ein Sicherungsstift eingefügt werden, der ein Herausrutschen des weiteren Anschlagelements aus den Haltenasen verhindert.

Gemäß einer Ausführungsform weist ein Randhalter zwei Teile auf. Ein erstes Teil ist ein Basiselement (z.B. einem Randblech) mit einer Abkantung an einer Oberseite, um Zugkräften auf das Modul entgegenzuwirken, und Laschen oder einer Abkantung an einer Unterseite, um die Zugkraft in den Träger einzuleiten. Ein zweites Teil ist ein Anschlagelement (beispielsweise eine Trägerplatte) um ein Abrutschen des Solarmoduls weg von dem Randhalter oder parallel zu dem Randhalter zu verhindern. Das Anschlagelement weist gemäß einer Ausführungsform Laschen auf, die mit dem Basiselement verbunden sind und ein Abrutschen des Basiselements weg vom Träger verhindern. Das Basiselement weist gemäß einer Ausführungsform ein Fixierelement (beispielsweise eine Bohrung für ein Befestigungsmittel wie beispielsweise eine Schraube) auf, mit der ein Verrutschen der Haltevorrichtung entlang des Trägers blockiert werden kann.

Stützen für die Träger bestehen aus zwei ineinander steckbaren Rundrohren, die mit einer konventionellen Rohrpresse formschlüssig miteinander verbunden werden, so dass die Stützen Zug- und Druckkräfte in Längsrichtung übertragen können.

Gemäß einer weiteren Ausführungsform werden Faserzementelemente (beispielsweise Faserzementplatten oder Faserzement-Wellplatten) für eine Ballastschüttung (Schüttgut) verwendet. Gemäß einer Ausführungsform werden die Faserzementelemente zwängungsfrei auf eine Auflage (beispielsweise linienförmige Auflagewinkel) aufgelegt, wobei gemäß einer

Ausführungsform ein Abstand zwischen einem Untergrund (beispielsweise einer Dachoberfläche) und einer Unterseite der Faserzementelemente so bemessen ist, dass dieser bei der geplanten Ballastregierung in der Mitte der Elemente verschwindet, d.h. das mit dem Schüttgut beaufschlagte Faserzementelement hängt in der Mitte des Elements bis auf den Untergrund durch. Bei einer Begehung der Faserzementplatte (beispielsweise bei der Montage) wird dadurch die Belastung in erheblichem Maß direkt auf den Untergrund übertragen und schützt somit das Faserzementelement vor Zerstörung durch Überlastung.

Haltevorrichtungen gemäß Ausführungsformen der hierin offenbarten Gegenstände sind für Flachdach-Unterkonstruktionen ebenso wie für Aufdach-Anlagen (auf Schrägdächer) verwendbar. Ebenso sind Haltevorrichtungen gemäß Ausführungsformen der hierin offenbarten Gegenstände für jeglichen anderen Untergrund sowie auch für eine Wandmontage geeignet. Die Randhalters können gemäß einer Ausführungsform den Vorteil haben, optisch sehr ansprechend zu sein und die Anlage ohne überstehende Träger abzuschließen.

Im Folgenden werden exemplarische Ausführungsformen der hierin offenbarten Gegenstände beschrieben, wobei beispielsweise auf ein Verfahren zum Montieren eines Solarmoduls, eine Haltevorrichtung, ein Montagesystem, eine Tragvorrichtung und eine Solaranlage Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren beschrieben, während andere Ausführungsformen mit Bezug auf eine Vorrichtung (beispielsweise eine Haltevorrichtung, ein Montagesystem, eine Tragvorrichtung und/oder eine Solaranlage) beschrieben werden. Jedoch wird der Fachmann der vorstehenden und der nachfolgenden Beschreibung, den Ansprüchen und den Zeichnungen entnehmen, dass, solange es nicht anders angegeben ist, Merkmale verschiedener Aspekte, Ausführungsformen und Beispiele kombinierbar sind und solche Kombinationen von Merkmalen als durch diese Anmeldung offenbart anzusehen sind. Beispielsweise ist selbst ein Merkmal, welches sich auf ein Verfahren bezieht, mit einem Merkmal kombinierbar, welches sich auf eine Vorrichtung bezieht, und umgekehrt.

Weitere Vorteile und Merkmale ergeben sich aus der folgenden beispielhaften Beschreibung derzeit bevorzugter Ausführungsformen.

Die einzelnen Figuren der Zeichnungen dieser Anmeldung sind lediglich als schematisch und als nicht maßstabsgetreu anzusehen. Die Erfindung wird durch die unabhängigen Ansprüche definiert.

### KURZE BESCHREIBUNG DER ZEICHNUNGEN

Fig. 1 zeigt ein Montagesystem mit einer Haltevorrichtung 100 gemäß Ausführungsformen der hierin offenbarten Gegenstände.
Fig. 2 zeigt eine Aufsicht auf das Basiselement 118 aus Fig. 1 von oben, von der Linie II-II in Fig. 1 gesehen.
Fig. 3 zeigt eine Seitenansicht des Basiselements 118 gesehen von der Linie III-III in Fig. 1.
Fig. 4 zeigt eine Ansicht des Anschlagelements 120 aus Fig. 1 von oben.
Fig. 5 zeigt das weitere Anschlagelement 128 aus Fig. 1 in einer Draufsicht.
Fig. 6 zeigt einen Randhalter 156 gemäß Ausführungsformen der hierin offenbarten Gegenstände.
Fig. 7 zeigt das Basiselement 158 des Randhalters 156 aus Fig. 6 von der Linie VII-VII aus gesehen.
Fig. 8 zeigt eine Draufsicht auf das Anschlagelement 160 des Randhalters 156 aus Fig. 6.
Fig. 9 zeigt eine weitere Haltevorrichtung 200 gemäß Ausführungsformen der hierin offenbarten Gegenstände in einer Schnittdarstellung.
Fig. 10 zeigt in einer Seitenansicht eine weitere Haltevorrichtung 300 gemäß Ausführungsformen der hierin offenbarten Gegenstände.
Fig. 11 zeigt einen Teil einer Solaranlage 182 mit einem ersten Solarmodul 102 und einem zweiten Solarmodul 202.
Fig. 12 zeigt einen Teil einer weiteren Solaranlage mit einer Tragvorrichtung gemäß Ausführungsformen der hierin offenbarten Gegenstände.

### DETAILLIERTE BESCHREIBUNG

Es wird angemerkt, dass in verschiedenen Figuren ähnliche oder identische Elemente oder Komponenten mit denselben Bezugszahlen versehen sind, oder mit Bezugszahlen, die sich nur in der ersten Ziffer unterscheiden. Solche Merkmale bzw. Komponenten, die mit den entsprechenden Merkmalen bzw. Komponenten in einer anderen Figur gleich oder zumindest funktionsgleich sind, werden nur bei ihrem ersten Auftreten in dem nachfolgenden Text detailliert beschrieben und die Beschreibung wird bei nachfolgendem Auftreten dieser Merkmale und Komponenten (bzw. der entsprechenden Bezugszahlen) nicht wiederholt.

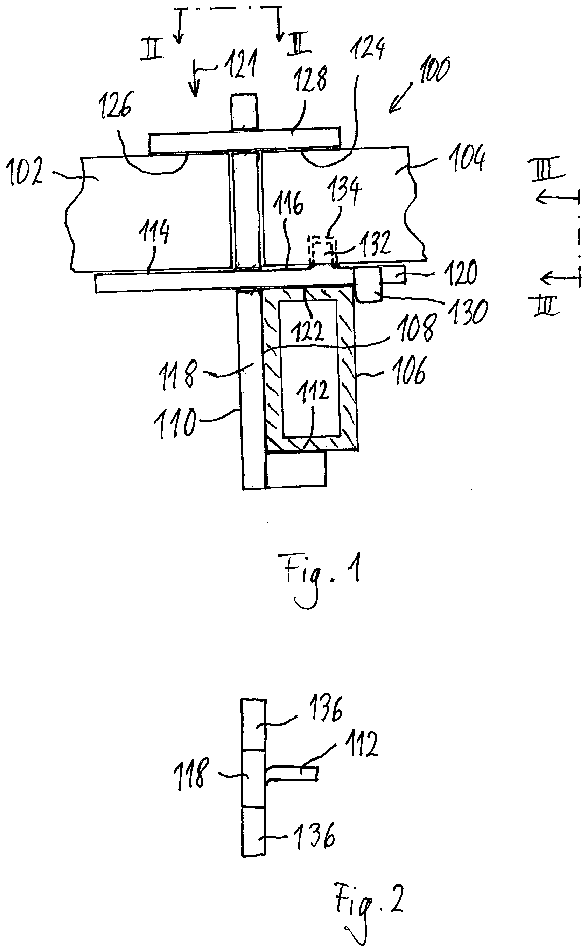

Fig. 1 zeigt ein Montagesystem mit einer Haltevorrichtung 100 gemäß Ausführungsformen der hierin offenbarten Gegenstände in einer Stirnansicht.

Die Haltevorrichtung 100 ist ausgebildet zum Montieren von mindestens einem Solarmodul, beispielsweise einem ersten Solarmodul 102 und einem zweiten Solarmodul 104, an einem Träger 106. Die Haltevorrichtung 100 weist ein Basiselement 118 auf, welches eine erste Oberfläche 108 und eine zweite Oberfläche 110 der Haltevorrichtung 100 bildet. Gemäß einer Ausführungsform sind die erste Oberfläche 108 und die zweite Oberfläche 110 der Haltevorrichtung voneinander abgewandt, beispielsweise wie in Fig. 1 dargestellt.

Die Haltevorrichtung weist ferner eine erste Anschlagfläche 112 und eine zweite Anschlagfläche 114 auf. Gemäß einer Ausführungsform liegt die erste Anschlagfläche 112 dem Träger 106 gegenüber, beispielsweise wie in Fig. 1 dargestellt. Gemäß einer Ausführungsform ist die erste Anschlagfläche 112 einstückig mit dem Basiselement 118 gebildet.

Gemäß einer Ausführungsform ist die zweite Anschlagfläche 114 und eine dritte Anschlagfläche 116 von einem Anschlagelement 120 gebildet, welches mit dem Basiselement 118 ineinander steckbar ist, beispielsweise wie in Fig. 1 dargestellt.

Beispielsweise wird gemäß einer Ausführungsform der Träger 106 an der ersten Anschlagfläche 112 und an der ersten Oberfläche 108 positioniert, beispielsweise wie in Fig. 1 dargestellt, und anschließend wird das Anschlagelement 120 in einer Aufsteckrichtung 121 auf das Basiselement 118 aufgesteckt, bis das Anschlagelement 120 auf dem Träger 106 aufliegt. In dieser Position wird das Anschlagelement 120 gemäß Ausführungsformen der hierin offenbarten Gegenstände fixiert, beispielsweise an dem Basiselement 118.

Gemäß einer Ausführungsform weist das Anschlagelement 120 ein Fixierelement 130 auf, welches den Träger 106 bezüglich des Anschlagelements fixiert. Insbesondere ist der Träger gemäß einer Ausführungsform zwischen dem Fixierelement 130 und der ersten Oberfläche 108 angeordnet, beispielsweise wie in Fig. 1 dargestellt.

Gemäß einer Ausführungsform weist das Anschlagelement eine vierte Anschlagfläche 122 auf, wobei der Träger 106 zwischen der ersten Anschlagfläche 112 und der vierten Anschlagfläche 122 positioniert oder positionierbar ist.

Gemäß einer Ausführungsform werden anschließend die Solarmodule 102, 104 auf die zweite Anschlagfläche 114 bzw. die dritte Anschlagfläche 116 aufgelegt. Gemäß einer Ausführungsform weist die dritte Anschlagfläche 116 ein Oberflächenprofil 132 auf, welches mit einem entsprechenden Oberflächenprofil 134 an dem zugeordneten Solarmodul 104 zusammenpasst, um das Solarmodul 104 an der Anschlagfläche 116 zu fixieren. Gemäß einer Ausführungsform ist das Oberflächenprofil 132 durch das Anschlagelement 120 gebildet, beispielsweise durch ein plastisch verformbares Element (beispielsweise eine Lasche) des Anschlagelements 120. Gemäß einer Ausführungsform weist das Oberflächenprofil 132 einen Vorsprung auf, beispielsweise wie in Fig. 1 dargestellt. Gemäß einer weiteren Ausführungsform weist das Oberflächenprofil 134 an dem zugeordneten Solarmodul 104 eine Vertiefung auf, beispielsweise wie in Fig. 1 dargestellt.

Obwohl in Fig. 1 die Oberflächenprofil 132, 134 für die dritte Anschlagfläche 116 bzw. das weitere Solarmodul 104 dargestellt sind, versteht es sich, dass entsprechende Oberflächenprofile auch zwischen anderen Elementen / Anschlagflächen vorgesehen sein können, beispielsweise zwischen der zweiten Anschlagfläche 114 und dem ersten Solarmodul 102.

Gemäß einer weiteren Ausführungsform weist die Haltevorrichtung 100 eine fünfte Anschlagfläche 124 und eine sechste Anschlagfläche 126 auf, die gemäß einer Ausführungsform von einem weiteren Anschlagelement 128 gebildet sind. Gemäß einer Ausführungsform wird das weitere Anschlagelement 128 auf das Basiselement 118 aufgesteckt, nachdem die Solarmodule 102, 104 auf den ihnen zugeordneten Anschlagflächen 114, 116 positioniert wurden (beispielsweise aufgelegt oder zwischen die zugeordneten Anschlagflächen eingeschwenkt wurden). Gemäß einer Ausführungsform ist mindestens ein Fixierelement vorgesehen, um das weitere Anschlagelement 128 bezüglich des Basiselements 118 zu fixieren. Auf diese Weise sind die Solarmodule 102, 104 auf einfache und effiziente Weise an dem Träger 106 montierbar.

Fig. 2 zeigt eine Aufsicht auf das Basiselement 118 aus Fig. 1 von oben, von der Linie II-II in Fig. 1 gesehen.

Gemäß einer Ausführungsform weist das Basiselement 118 an seinem oberen Ende mindestens ein Rastelement 136 auf, beispielsweise zwei Rastelemente, wie in Fig. 2 dargestellt. Ferner ist gemäß einer Ausführungsform die erste Anschlagfläche 112 durch einen Teil des Basiselements 118 gebildet, insbesondere einen plastisch deformierten Teil des Basiselements 118. Beispielsweise kann vorgesehen sein, dass das Basiselement 118 eine Lasche aufweist, die bezüglich des Basiselements 118 abgewinkelt ist, um die erste Anschlagfläche 112 zu bilden, beispielsweise wie in Fig. 2 dargestellt.

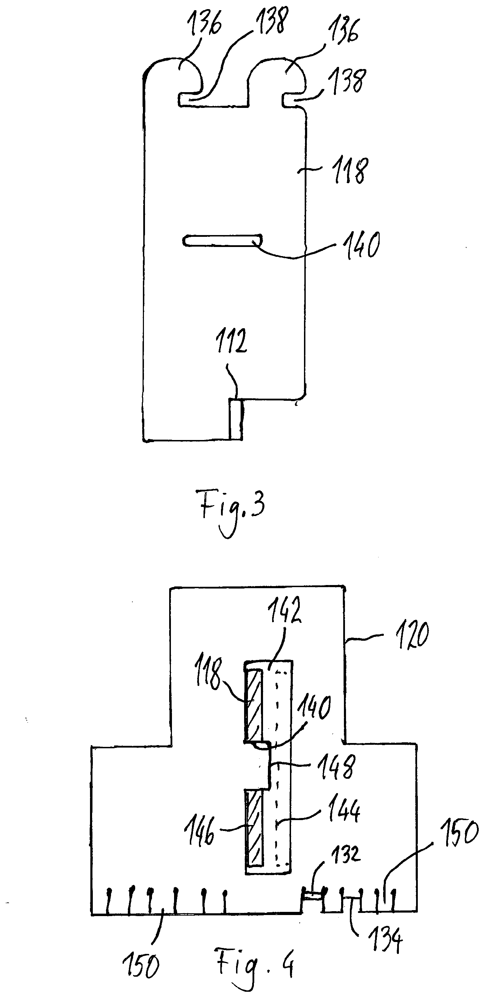

Fig. 3 zeigt eine Seitenansicht des Basiselements 118 gesehen von der Linie III-III in Fig. 1.

Gemäß einer Ausführungsform weist das Rastelement 136 des Basiselements 110 eine Hinterschneidung 138 auf, in welcher ein Teil des weiteren Anschlagelements 128 (siehe Fig. 1, in Fig. 3 nicht dargestellt) positionierbar ist, beispielsweise durch Einschieben, um das weitere Anschlagelement 128 mit dem Basiselement 118 zu verrasten.

Ferner weist das Basiselement 118 ein Fixierelement 140 auf, beispielsweise in Form eines Schlitzes (beispielsweise wie in Fig. 1 dargestellt), welches mit einem korrespondierenden Rastelement des Anschlagelements 120 (in Fig. 3 nicht dargestellt) verrastbar ist.

Fig. 4 zeigt eine Ansicht des Anschlagelements 120 aus Fig. 1 von oben.

Gemäß einer Ausführungsform sind das Basiselement 118 und das Anschlagelement 120 ineinander steckbar. Hierzu kann das Anschlagelement 120 beispielsweise einen Durchbruch 142 aufweisen, durch welchen das Basiselement 118 in einer ersten Position 144, die in Fig. 4 gestrichelt dargestellt ist, durch das Anschlagelement 120 hindurch steckbar ist. Durch anschließende Seitwärtsbewegung in eine zweite Position des Basiselements 118, dargestellt bei 146, kann ein Fixierelement 148 des Anschlagelements 120 mit dem Fixierelement 140 des Basiselements in Eingriff gebracht werden, um das Basiselement 118 und das Anschlagelement 120 bezüglich einander zu fixieren. Beispielsweise kann das Fixierelement 148 des Anschlagelements durch eine Lasche gebildet sein, welche durch den korrespondierenden Schlitz (Fixierelement 140) des Basiselements 118 steckbar ist. Gemäß einer Ausführungsform kann die Lasche plastisch deformierbar sein, um die zweite Position 146 des Basiselements 118 zu sichern.

Gemäß einer Ausführungsform weist eines der hierin beschriebenen Elemente, beispielsweise das Anschlagelement 120, ein plastisch deformierbares Element 150 auf, beispielsweise eine biegbare Lasche, beispielsweise wie in Fig. 4 exemplarisch bei 150 dargestellt.

Wie vorstehend mit Bezug auf Fig. 1 beschrieben, können die plastisch deformierbaren Elemente 150 zur Herstellung des Oberflächenprofils 132 oder des Fixierelement 130 verwendet werden. Gemäß einer Ausführungsform sind mehrere plastisch deformierbare Elemente 150 vorgesehen, um abhängig vom jeweiligen Einsatzzweck (beispielsweise abhängig vom verwendeten Solarmodul 102, 104 oder vom verwendeten Träger 106) jeweils ein geeignetes Element (beispielsweise ein Fixierelement 130 oder ein Oberflächenprofil 132) herzustellen. Die entsprechende Deformation des plastisch deformierbaren Elements 150 kann hierbei gemäß einer Ausführungsform bei der Montage des Solarmoduls am Aufstellungsort der Solaranlage erfolgen.

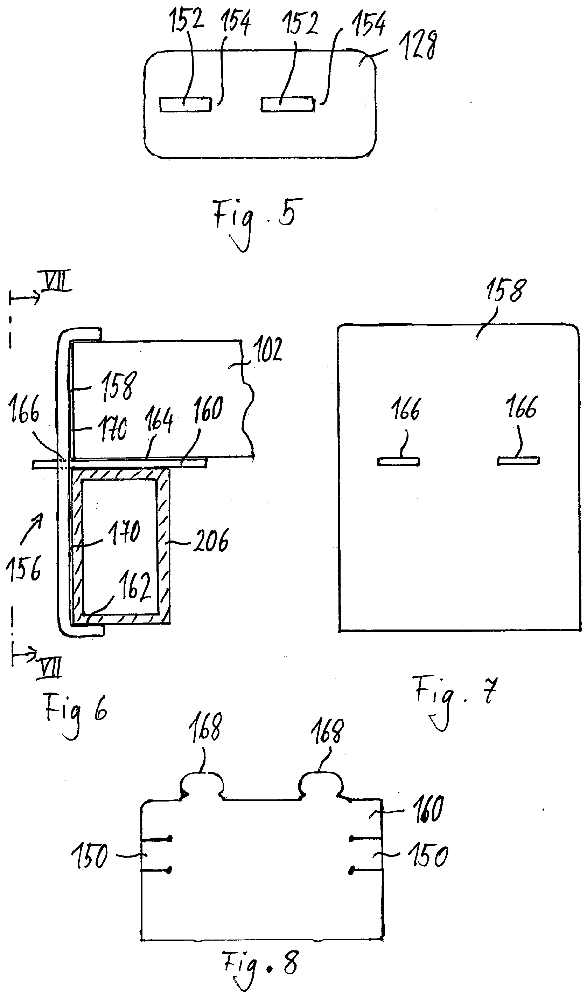

Fig. 5 zeigt das weitere Anschlagelement 128 aus Fig. 1 in einer Draufsicht.

Gemäß einer Ausführungsform weist das weitere Anschlagelement 128 für jedes Rastelement 136 des Basiselements 118 einen Durchbruch 152 auf, durch welchen das Rastelement 136 hindurch steckbar ist, um durch anschließende Verschiebung des weiteren Anschlagelements 128 bezüglich des Basiselements 118 einen angrenzenden Teil 154 des weiteren Anschlagelements 128 in die Hinterschneidung 138 des Basiselements (siehe Fig. 3) zu bringen und auf diese Weise das weitere Anschlagelement 128 und das Basiselement 118 miteinander zu verrasten. Zur Fixierung dieser Position kann in den freiliegenden Teil des Durchbruchs 152 ein Sicherungselement, beispielsweise ein Sicherungsstift, ein Sicherungskunststoff, etc., eingebracht werden. Auf diese Weise können Zugkräfte auf das weitere Anschlagelement 128 sicher auf das Basiselement 118 übertragen werden.

Fig. 6 zeigt einen Randhalter 156 gemäß Ausführungsformen der hierin offenbarten Gegenstände.

Gemäß einer Ausführungsform weist auch der Randhalter ein Basiselement 158 und ein Anschlagelement 160 auf. Eine erste Anschlagfläche 162 des Randhalters 156 wird gemäß einer Ausführungsform durch das Basiselement 158 gebildet, beispielsweise durch einen abgebogenen Teil eines plattenförmigen Basiselements, beispielsweise wie in Fig. 6 dargestellt. Gemäß einer Ausführungsform wird eine zweite Anschlagfläche 164 des Randhalters 156 durch das Anschlagelement 160 des Randhalters gebildet. Gemäß einer Ausführungsform ist das Anschlagelement 160 des Randhalters durch mindestens einen Durchbruch 166 in dem Basiselement 158 des Randhalters hindurch gesteckt.

An der ersten Anschlagfläche 162 wird gemäß einer Ausführungsform ein zweiter Träger 206 positioniert. Zur Fixierung der Position des zweiten Trägers 206 kann ein Fixierelement vorgesehen sein, wie es mit Bezug auf Fig. 1 beschrieben wurde (in Fig. 6 nicht dargestellt). Auf der zweiten Anschlagfläche 164 wird gemäß einer Ausführungsform ein Solarmodul positioniert, beispielsweise das Solarmodul 102. Es versteht sich, dass somit der Randhalters 156 und die Haltevorrichtung 100 aus Fig. 1 zusammen das Solarmodul 102 von zwei Seiten fixieren. Gemäß einer Ausführungsform liegen sowohl das Solarmodul 102 als auch der zweite Träger 206 derselben Seite (d. h. derselben Oberfläche 170) des Basiselements 158 gegenüber. Somit können mit einer geeigneten Anzahl an Randhaltern 156 und Haltevorrichtungen 100 beliebig große Flächen ohne große Zwischenräume mit Solarmodulen bedeckt werden.

Fig. 7 zeigt das Basiselement 158 des Randhalters 156 aus Fig. 6 von der Linie VII-VII aus gesehen.

Gemäß einer Ausführungsform können beispielsweise zwei Durchbrüche 166 vorgesehen sein, beispielsweise wie in Fig. 7 dargestellt.

Fig. 8 zeigt eine Draufsicht auf das Anschlagelement 160 des Randhalters 156 aus Fig. 6.

Gemäß einer Ausführungsform weist das Anschlagelement 160 des Randhalters 156 Vorsprünge 168 auf, welche durch die Durchbrüche 166 des Basiselements (vergleiche Fig. 7) hindurch steckbar sind, um das Anschlagelement 160 des Randhalters 156 an dem Basiselement 158 zu fixieren. Gemäß einer Ausführungsform können die Vorsprünge 168 plastisch deformierbar sein, um durch Deformieren (z.B. Abwinkeln oder Verdrehen) der Vorsprünge 168 das Anschlagelement 160 in dieser eingesteckten Position in dem Basiselement 158 zu sichern. Gemäß einer weiteren Ausführungsform kann das Anschlagelement 160 eines oder mehrere plastische deformierbare Elemente 150 aufweisen, wie sie beispielhaft mit Bezug auf Fig. 4 beschrieben wurden und wie sie beispielsweise zur Fixierung des zweiten Trägers 206 und/oder des zugeordneten Solarmoduls 102 verwendet werden können.

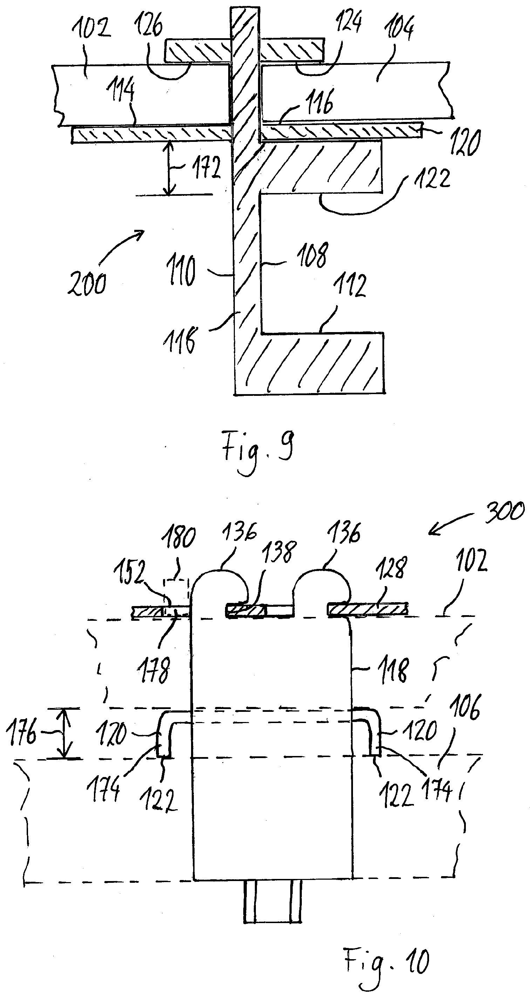

Fig. 9 zeigt eine weitere Haltevorrichtung 200 gemäß Ausführungsformen der hierin offenbarten Gegenstände in einer Schnittdarstellung.

Gemäß einer Ausführungsform ist bei der Haltevorrichtung 200 die vierte Anschlagfläche 122, welche der ersten Anschlagfläche 112 gegenüberliegt, durch das Basiselement 118 gebildet, beispielsweise wie in Fig. 9 dargestellt. Mit anderen Worten ist bei dieser Ausführungsform die vierte Anschlagfläche 122 mit Abstand 172 von dem Anschlagelement 120 angeordnet.

Fig. 10 zeigt in einer Seitenansicht eine weitere Haltevorrichtung 300 gemäß Ausführungsformen der hierin offenbarten Gegenstände.

Gemäß einer Ausführungsform weist das Anschlagelement 120 Vorsprünge 174 auf, welche (beispielsweise an ihren Enden) die vierte Anschlagfläche 122 bilden. Beispielsweise können die Vorsprünge 174 durch einen Teil eines plattenförmigen Anschlagelements 120 gebildet sein, welcher gegenüber einer Plattenebene abgewinkelt ist, beispielsweise wie in Fig. 10 dargestellt. Auf diese Weise ist über die Vorsprünge 174 ein Abstand 176 zwischen dem Solarmodul 102 und der vierten Anschlagfläche 122 (bzw. einer Oberseite des Trägers 106) definiert.

Fig. 10 zeigt ferner Rastelemente 136, wie sie beispielsweise mit Bezug auf Fig. 3 vorstehend bereits beschrieben wurden. Gemäß einer Ausführungsform ist in einem eingefügten Zustand, in welchem das weitere Anschlagelement 128 in die Hinterschneidung 138 eingeschoben ist, in den freiliegenden Teil 178 des Durchbruchs 152 ein Sicherungselement 180 eingebracht, beispielsweise wie in Fig. 10 dargestellt.

Durch die Ausbildung der Verrastung mit den Rastelementen 136 des Basiselements 118 und dem weiteren Anschlagelement 128 kann auf einfache Weise eine hohe mechanische Festigkeit erreicht werden, insbesondere gegen Zugkräfte, welche auf die Solarmodule in eine Richtung von der zweiten Anschlagfläche 114 weg wirken. Solche Zugkräfte treten beispielsweise auf, wenn Wind über die Solarmodule hinwegströmt. Die hierbei auf die fünfte Anschlagfläche und sechste Anschlagfläche einwirkenden Kräfte (siehe beispielsweise Fig. 1) werden über die erste Anschlagfläche 112 auf den Träger 106 übertragen.

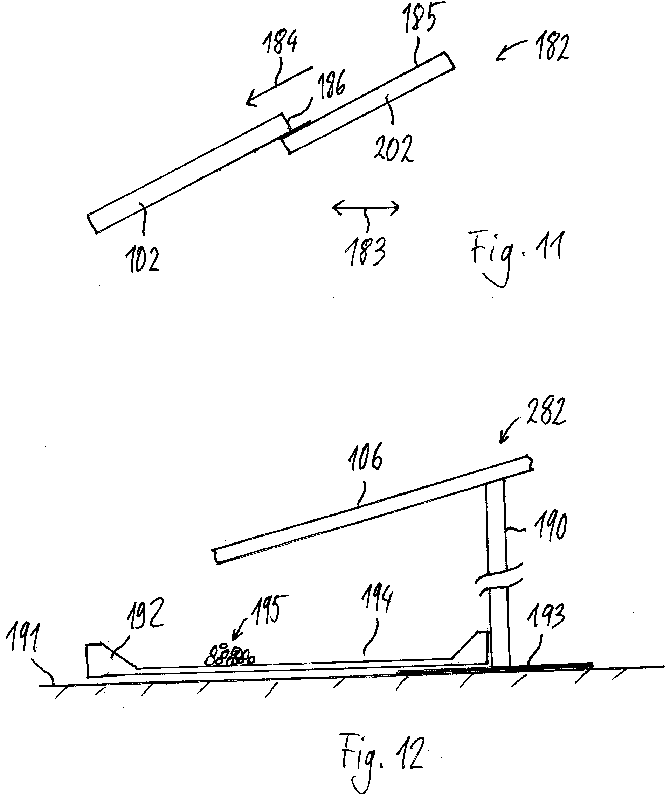

Fig. 11 zeigt einen Teil einer Solaranlage 182 mit einem ersten Solarmodul 102 und einem zweiten Solarmodul 202.

Gemäß einer Ausführungsform sind die Solarmodule 102 und 202 schräg zu einer horizontalen Richtung 183 angeordnet wobei das erste Solarmodul 102 in einer Hangabtriebsrichtung 184 unter dem zweiten Solarmodul 202 angeordnet ist. Ferner ist das erste Solarmodul 102 in einem Überlappungsbereich mit dem zweiten Solarmodul 202 über dem zweiten Solarmodul 202 angeordnet, beispielsweise wie in Fig. 11 dargestellt. Das erste Solarmodul 102 bildet somit über der Oberfläche 185 des Solarmoduls 202 eine Barriere 186, die beispielsweise auf den Solarmodulen 102, 202 befindlichen Schnee an einem Abrutschen hindert. Der Neigungswinkel der Solarmodule beträgt typischerweise 15 Grad (beispielsweise zwischen 10 Grad und 20 Grad).

Fig. 12 zeigt einen Teil einer weiteren Solaranlage mit einer Tragvorrichtung gemäß Ausführungsformen der hierin offenbarten Gegenstände.

Gemäß einer Ausführungsform weist die Solaranlage 282 eine Tragvorrichtung für mindestens ein Solarmodul auf (Solarmodul in Fig. 12 nicht dargestellt). Der Träger 106 ist über Stützen 190 gegenüber einem Untergrund 191 (beispielsweise einem Flachdach, einem Schrägdach oder dem Boden) abgestützt. Gemäß einer Ausführungsform sind die Stützen 190 Teleskopstützen, die stufenlos oder stufenweise in ihrer Höhe verstellbar sind. Ferner ist der Träger 106 über die Stützen 190 an einer Faserzementplatte 192 befestigt, indem die Faserzementplatte 192 auf eine Basis 193 der Stützen 190 gestellt ist. Die Faserzementplatte ist ausgebildet, um ein Schüttgut aufzunehmen, in Fig. 12 beispielhaft dargestellt bei 195. Hierzu kann die Faserzementplatte eine Vertiefung 194 aufweisen, beispielsweise wie in Fig. 12 dargestellt. Gemäß anderer Ausführungsform kann die Faserzementplatte eine ebene Platte (oder eine Wellplatte) sein, auf welcher das Schüttgut 195, beispielsweise Kies, deponierbar ist. Durch das Gewicht des Schüttguts und die mechanische Stabilität der Faserzementplatte kann die Solaranlage auch hohen Windkräften widerstehen.

Gemäß einer Ausführungsform sind an dem Träger 106 eine oder mehrere von hierin offenbarten Haltevorrichtungen angebracht (in Fig. 12 nicht dargestellt). Mittels der Haltevorrichtungen ist mindestens ein Solarmodul an dem Träger 106 montierbar.

Es sollte angemerkt werden, dass eine Solaranlage oder deren Elemente, wie sie hierin beschrieben sind, nicht auf die dezidierten Entitäten beschränkt ist, wie sie in einigen Ausführungsformen beschrieben sind. Vielmehr können die hierin offenbarten Gegenstände auf zahlreichen Weisen mit verschiedener Granularität auf Vorrichtungs-Niveau oder Verfahrensniveau implementiert werden, während sie immer noch die offenbarte spezifische Funktionalität liefern.

Es wird darauf hingewiesen, dass die hier beschriebenen Ausführungsformen lediglich eine beschränkte Auswahl an möglichen Ausführungsvarianten der hierin offenbarten Gegenstände darstellen. So ist es möglich, die Merkmale verschiedener Ausführungsformen in geeigneter Weise miteinander zu kombinieren, so dass für den Fachmann mit den hier expliziten Ausführungsvarianten eine Vielzahl von verschiedenen Ausführungsformen als offenbart anzusehen sind. Ferner sollte erwähnt werden, dass Begriffe wie "ein" oder "eines" eine Mehrzahl nicht ausschließen. Begriffe wie "enthaltend" oder "aufweisend" schließen weitere Merkmale oder Verfahrensschritte nicht aus. Folglich steht gemäß einer Ausführungsform der Begriff "aufweisend" für "unter anderem aufweisend". Gemäß einer weiteren Ausführungsform steht der Begriff "aufweisend" für "bestehend aus". Gemäß einer Ausführungsform umfasst der Begriff "eingerichtet für" unter anderem die Bedeutung "konfiguriert, um".

Es sollte auch angemerkt werden, dass Bezugszeichen in den Ansprüchen nicht als den Umfang der Ansprüche einschränkend ausgelegt werden sollten. Ferner sollte angemerkt werden, dass Bezugszeichen in der Beschreibung und die Bezugnahme der Beschreibung auf die Zeichnungen nicht als den Umfang der Beschreibung einschränkend ausgelegt werden sollen. Vielmehr veranschaulichen die Zeichnungen nur eine exemplarische Implementierung einer bestimmten Kombination von mehreren Ausführungsformen der hierin offenbarten Gegenstände, wobei jede andere Kombination von Ausführungsformen ebenso möglich und mit dieser Anmeldung als offenbart anzusehen ist.

Zusammenfassend bleibt festzustellen:
Offenbart wird eine Haltevorrichtung 100 zum Montieren von mindestens einem Solarmodul 102, 104 an einem Träger 106, die Haltevorrichtung 100 aufweisend: eine erste Oberfläche 108 und eine zweite Oberfläche 110, wobei die erste Oberfläche 108 und die zweite Oberfläche 110 voneinander abgewandt sind; eine erste Anschlagfläche 112, welche an dem Träger 106 positionierbar ist, wobei der Träger 106 der ersten Oberfläche 108 gegenüber liegt und; eine zweite Anschlagfläche 114, an welcher ein Solarmodul 102 positionierbar ist, wobei das Solarmodul 102 der zweiten Oberfläche gegenüber liegt.

## Patentansprüche

1. Tragvorrichtung für mindestens ein Solarmodul, die Tragvorrichtung aufweisend:
mindestens eine Faserzementplatte (192);
mindestens einen Träger (106), wobei an dem Träger (106) mindestens ein Solarmodul (102) positionierbar ist;
wobei die mindestens eine Faserzementplatte (192) ausgebildet ist, um ein Schüttgut (195) aufzunehmen;
wobei der Träger (106) über Stützen (190) gegenüber einem Untergrund (191) abgestützt ist;
wobei der Träger (106) über die Stützen (190) an der Faserzementplatte (192) befestigt ist, indem die Faserzementplatte (192) auf eine Basis (193) der Stützen (190) gestellt ist;
wobei die Stützen (190) aus zwei ineinander gesteckten Rundrohren bestehen, die formschlüssig miteinander verbunden sind, so dass die Stützen (190) Zug- und Druckkräfte in Längsrichtung übertragen können, wobei die formschlüssige Verbindung mit einer Rohrpresse erzeugt wurde.

2. Tragvorrichtung gemäß Anspruch **1,** wobei die Faserzementplatte (192) eine ebene Platte ist.

3. Tragvorrichtung gemäß Anspruch **1,** wobei die Faserzementplatte (192) eine Wellplatte ist.

4. Tragvorrichtung gemäß Anspruch **1,** wobei die Faserzementplatte (192) eine Vertiefung (194) aufweist, zur Aufnahme des Schüttguts (195).

5. Solaranlage aufweisend:
eine Tragvorrichtung gemäß irgendeinem der Ansprüche 1 bis 4;
eine Haltevorrichtung (100, 200, 300) zum Montieren von mindestens einem Solarmodul (102, 104) an dem Träger (106), die Haltevorrichtung (100) aufweisend:
eine erste Oberfläche (108) und eine zweite Oberfläche (110), wobei die erste Oberfläche (108) und die zweite Oberfläche (110) voneinander abgewandt sind;
eine erste Anschlagfläche (112), welche an dem Träger (106) positionierbar ist, wobei der Träger (106) der ersten Oberfläche (108) gegenüber liegt und;
eine zweite Anschlagfläche (114), an welcher ein Solarmodul (102) positionierbar ist, wobei das Solarmodul (102) der zweiten Oberfläche gegenüber liegt; und
mindestens ein Solarmodul (102), welches an der zweiten Anschlagfläche (114) der Haltevorrichtung (100) positioniert ist.

6. Solaranlage nach Anspruch 5, wobei die Haltevorrichtung (100, 200, 300) ferner eine dritte Anschlagfläche (116) aufweist, an welcher ein weiteres Solarmodul (104) positionierbar ist, wobei das weitere Solarmodul (104) der ersten Oberfläche (108) gegenüber liegt;
insbesondere wobei die Haltevorrichtung (100, 200, 300) ferner aufweist
ein Basiselement (118), insbesondere ein plattenförmiges Basiselement, welches die erste Oberfläche (108) und die zweite Oberfläche (110) aufweist;
insbesondere wobei die zweite Anschlagfläche (114) und die dritte Anschlagfläche (116) von einem Anschlagelement (120) gebildet sind, welches an dem Basiselement (118) befestigbar ist.

7. Solaranlage nach Anspruch 6, wobei die Haltevorrichtung (100, 200, 300)ferner eine vierte Anschlagfläche (122) aufweist,
wobei die vierte Anschlagfläche (122) der ersten Anschlagfläche (112) gegenüber liegt und der Träger zwischen der ersten Anschlagfläche (112) und der vierten Anschlagfläche (122) positionierbar ist;
insbesondere wobei die Haltevorrichtung mindestens eines der folgenden Merkmale aufweist:
das Anschlagelement (120) weist die vierte Anschlagfläche (122) auf und die dritte Anschlagfläche (116) und die vierte Anschlagfläche (122) weisen in entgegengesetzte Richtungen;
die vierte Anschlagfläche ist mit Abstand von dem Anschlagelement (120) angeordnet;
die vierte Anschlagfläche (122) ist von dem Basiselement (118) gebildet.

8. Solaranlage nach einem der Ansprüche 6 bis 7, wobei die Haltevorrichtung (100, 200, 300) ferner eine fünfte Anschlagfläche (124) aufweist, welche der dritten Anschlagfläche (116) gegenüberliegt und welche mit Abstand von der dritten Anschlagfläche (116) angeordnet ist, wobei sich das weitere Solarmodul (104) zwischen der dritten Anschlagfläche (116) und der fünften Anschlagfläche erstreckt.

9. Solaranlage nach einem der Ansprüche 5 bis 8, wobei Haltevorrichtung (100, 200, 300) ferner eine sechste Anschlagfläche (126) aufweist, welche der zweiten Anschlagfläche (114) gegenüberliegt und welche mit Abstand von der zweiten Anschlagfläche (114) angeordnet ist, wobei sich das Solarmodul (104) zwischen der zweiten Anschlagfläche (114) und der sechsten Anschlagfläche erstreckt.

10. Solaranlage mit den Merkmalen gemäß Anspruch 8 und Anspruch 9,
wobei die fünfte Anschlagfläche (124) und die sechste Anschlagfläche (126) von einem weiteren Anschlagelement (128) gebildet sind;
insbesondere wobei das weitere Anschlagelement (128) auf das Basiselement (118) aufsteckbar ist und mit dem Basiselement (118) verrastbar ist.

11. Solaranlage gemäß irgendeinem der Ansprüche 5 bis 10,
wobei mindestens eine der Anschlagflächen ein plastisch deformierbares Element aufweist zum Fixieren eines an der betreffenden Anschlagfläche angeordneten Bauteils; und/oder
wobei das Anschlagelement (120) und das Basiselement (118) ineinander steckbar ausgebildet sind zum Herstellen einer Steckverbindung;
insbesondere wobei die Steckverbindung ein plastisch deformierbares Element aufweist zum Fixieren der Steckverbindung.

12. Verfahren zum Herstellen einer Tragvorrichtung für mindestens ein Solarmodul, das Verfahren aufweisend:
Bereitstellen mindestens eine Faserzementplatte (192);
Bereitstellen von mindestens einem Träger (106), wobei an dem Träger (106) mindestens ein Solarmodul (102) positionierbar ist;
wobei die mindestens eine Faserzementplatte (192) ausgebildet ist, um ein Schüttgut (195) aufzunehmen;
wobei der Träger (106) über Stützen (190) gegenüber einem Untergrund (191) abgestützt ist;
wobei der Träger (106) über die Stützen (190) an der Faserzementplatte (192) befestigt ist, indem die Faserzementplatte (192) auf eine Basis (193) der Stützen (190) gestellt ist;
wobei die Stützen (190) aus zwei ineinander gesteckten Rundrohren bestehen;
das Verfahren ferner aufweisend formschlüssig miteinander Verbinden der ineinander gesteckten Rundrohre mit einer Rohrpresse, so dass die Stützen (190) Zug- und Druckkräfte in Längsrichtung übertragen können.

## Claims

1. A support device for at least one solar module, the support device comprising:
at least one fiber cement plate (192);
at least one carrier (106), wherein at least one solar module (102) is positionable at the carrier (106);
wherein the at least one fiber cement plate (192) is configured to receive a bulk material (195);
wherein the carrier (106) is supported with respect to a ground (191) via supports (190);
wherein the carrier (106) is fastened to the fiber cement plate (192) via the supports (190) by placing the fiber cement plate (192) on a base (193) of the supports (190);
wherein the supports (190) consist of two round pipes which are plugged into one another and which are connected to one another in a form-fitting manner such that the supports (190) can transmit tensile and compressive forces in longitudinal direction, wherein the form-fitting connection has been produced with a pipe press.

2. The support device according to claim 1, wherein the fiber cement plate (192) is a flat plate.

3. The support device according to claim 1, wherein the fiber cement plate (192) is a corrugated plate.

4. The support device according to claim 1, wherein the fiber cement plate (192) comprises a recess (194) for receiving the bulk material (195).

5. A solar installation comprising:
a support device according to any one of claims 1 to 4;
a holding device (100, 200, 300) for mounting of at least one solar module (102, 104) to the carrier (106), the holding device (100) comprising:
a first surface (108) and a second surface (110), wherein the first surface (108) and the second surface (110) face away from each other;
a first stop face (112) which is positionable at the carrier (106), wherein the carrier (106) is opposite the first surface (108) and;
a second stop face (114) at which a solar module (102) is positionable, wherein the solar module (102) is opposite the second surface; and
at least one solar module (102) which is positioned at the second stop face (114) of the holding device (100).

6. The solar installation according to claim 5, wherein the holding device (100, 200, 300) further comprises a third stop face (116) at which a further solar module (104) is positionable, wherein the further solar module (104) is opposite the first surface (108);
in particular wherein the holding device (100, 200, 300) further comprises
a base element (118), in particular a plate-shaped base element, which comprises the first surface (108) and the second surface (110);
in particular wherein the second stop face (114) and the third stop face (116) are formed by a stop element (120) which is attachable to the base element (118).

7. The solar installation according to claim 6, wherein the holding device (100, 200, 300) further comprises a fourth stop face (122),
wherein the fourth stop face (122) is opposite the first stop face (112) and the carrier is positionable between the first stop face (112) and the fourth stop face (122);
in particular wherein the holding device comprises at least one of the following features:
the stop element (120) comprises the fourth stop face (122) and the third stop face (116) and the fourth stop face (122) face in opposite directions;
the fourth stop face is arranged at a distance from the stop element (120);
the fourth stop face (122) is formed by the base element (118).

8. The solar installation according to any one of claims 6 to 7, wherein the holding device (100, 200, 300) further comprises a fifth stop face (124) which is opposite the third stop face (116) and which is arranged at a distance from the third stop face (116), wherein the further solar module (104) extends between the third stop face (116) and the fifth stop face.

9. The solar installation according to any one of claims 5 to 8, wherein the holding device (100, 200, 300) further comprises a sixth stop face (126) which is opposite the second stop face (114) and which is arranged at a distance from the second stop face (114), wherein the solar module (104) extends between the second stop face (114) and the sixth stop face.

10. A solar installation comprising the features according to claim 8 and claim 9,
wherein the fifth stop face (124) and the sixth stop face (126) are formed by a further stop element (128);
in particular wherein the further stop element (128) is pluggable onto the base element (118) and is latchable to the base element (118).

11. The solar installation according to any one of claims 5 to 10,
wherein at least one of the stop faces comprises a plastically deformable element for fixing a component arranged at the respective stop face; and/or
wherein the stop element (120) and the base element (118) are configured to be plugable into one another for producing a plug-type connection;
in particular wherein the plug-type connection comprises a plastically deformable element for fixing the plug-type connection.

12. A method for producing a support device for at least one solar module, the method comprising:
providing at least one fiber cement plate (192);
providing at least one carrier (106), wherein at least one solar module (102) is positionable at the carrier (106);
wherein the at least one fiber cement plate (192) is configured to receive a bulk material (195);
wherein the carrier (106) is supported with respect to a ground (191) via supports (190);
wherein the carrier (106) is fastened to the fiber cement plate (192) via the supports (190) by placing the fiber cement plate (192) on a base (193) of the supports (190);
wherein the supports (190) consist of two round pipes which are plugged into one another;
the method further comprising connecting in a form-fitting manner the round pipes which are plugged into one another to one another with a pipe press such that the supports (190) can transmit tensile and compressive forces in longitudinal direction.

## Revendications

1. Dispositif de support pour au moins un module solaire, le dispositif de support présentant :
au moins une plaque en fibrociment (192) ;
au moins un support (106), dans lequel au moins un module solaire (102) peut être positionné sur le support (106) ;
dans lequel au moins une plaque de fibrociment (192) est conçue pour recevoir un matériau en vrac (195) ;
dans lequel le support (106) est supporté par des montants (190) par rapport à un support (191) ;
dans lequel le support (106) est fixé sur la plaque en fibrociment (192) par l'intermédiaire des montants (190) en plaçant la plaque en fibrociment (192) sur une base (193) des montants (190) ;
dans lequel les montants (190) sont constitués de deux tubes ronds emboîtés l'un dans l'autre qui sont reliés l'un à l'autre par liaison de forme, de sorte que les montants (190) peuvent transmettre des forces de traction et de compression dans la direction longitudinale, la liaison par liaison de forme ayant été créée avec une boudineuse à tubes.

2. Dispositif de support selon la revendication 1, dans lequel la plaque en fibrociment (192) est une plaque plane.

3. Dispositif de support selon la revendication 1, dans lequel la plaque en fibrociment (192) est une plaque ondulée.

4. Dispositif de support selon la revendication 1, dans lequel la plaque en fibrociment (192) présente un renfoncement (194) pour recevoir le matériau en vrac (195).

5. Installation solaire présentant :
un dispositif de support selon l'une quelconque des revendications 1 à 4 ;
un dispositif de retenue (100, 200, 300) pour le montage d'au moins un module solaire (102, 104) sur le support (106), qui présente le dispositif de retenue (100) :
une première surface (108) et une seconde surface (110), dans laquelle la première surface (108) et la seconde surface (110) sont opposées l'une à l'autre ;
une première surface de butée (112) qui peut être positionnée sur le support (106), dans laquelle le support (106) est en face de la première surface (108), et ;
une deuxième surface de butée (114) sur laquelle un module solaire (102) peut être positionné, dans laquelle le module solaire (102) est en face de la seconde surface ; et
au moins un module solaire (102), qui est positionné sur la deuxième surface de butée (114) du dispositif de retenue (100).

6. Installation solaire selon la revendication 5, dans laquelle le dispositif de retenue (100, 200, 300) présente en outre une troisième surface de butée (116) sur laquelle un module solaire supplémentaire (104) peut être positionné, dans laquelle le module solaire supplémentaire (104) est en face de la première surface (108) ;
en particulier dans laquelle le dispositif de retenue (100, 200, 300) présente en outre
un élément de base (118), en particulier un élément de base en forme de plaque, qui présente la première surface (108) et la seconde surface (110) ;
en particulier dans laquelle la deuxième surface de butée (114) et la troisième surface de butée (116) sont formées par un élément de butée (120) qui peut être fixé à l'élément de base (118).

7. Installation solaire selon la revendication 6, dans laquelle le dispositif de retenue (100, 200, 300) présente en outre une quatrième surface de butée (122),
la quatrième surface de butée (122) est opposée à la première surface de butée (112) et le support peut être positionné entre la première surface de butée (112) et la quatrième surface de butée (122) ;
en particulier dans laquelle le dispositif de retenue présente au moins une des caractéristiques suivantes :
l'élément de butée (120) présente la quatrième surface de butée (122) et la troisième surface de butée (116) et la quatrième surface de butée (122) sont dirigées dans des directions opposées ;
la quatrième surface de butée est agencée à distance de l'élément de butée (120) ;
la quatrième surface de butée (122) est formée par l'élément de base (118).

8. Installation solaire selon l'une quelconque des revendications 6 à 7, dans laquelle le dispositif de support (100, 200, 300) présente en outre une cinquième surface de butée (124) qui est en face de la troisième surface de butée (116) et qui est agencée à distance de la troisième surface de butée (116), dans laquelle le module solaire supplémentaire (104) s'étend entre la troisième surface de butée (116) et la cinquième surface de butée.

9. Installation solaire selon l'une quelconque des revendications 5 à 8, dans laquelle le dispositif de retenue (100, 200, 300) comprend en outre une sixième surface de butée (126) qui est en face de la deuxième surface de butée (114) et qui est agencée à distance de la deuxième surface de butée (114), dans laquelle le module solaire (104) s'étend entre la deuxième surface de butée (114) et la sixième surface de butée.

10. Installation solaire avec les caractéristiques selon la revendication 8 et la revendication 9,
dans laquelle la cinquième surface de butée (124) et la sixième surface de butée (126) sont formées par un élément de butée supplémentaire (128) ;
en particulier dans laquelle l'élément de butée supplémentaire (128) peut être enfiché sur l'élément de base (118) et peut être enclenché avec l'élément de base (118).

11. Installation solaire selon l'une quelconque des revendications 5 à 10,
dans laquelle au moins l'une des surfaces de butée présente un élément déformable plastiquement pour la fixation d'un composant disposé sur la surface de butée concernée ; et/ou
dans laquelle l'élément de butée (120) et l'élément de base (118) sont conçus de manière à pouvoir être enfichés l'un dans l'autre pour établir une connexion enfichable ;
en particulier dans laquelle la connexion enfichable présente un élément déformable plastiquement pour fixer la connexion enfichable.

12. Procédé de fabrication d'un dispositif de support pour au moins un module solaire, le procédé présentant les étapes consistant à :
prévoir au moins une plaque en fibrociment (192) ;
fournir au moins un support (106), dans lequel au moins un module solaire (102) peut être positionné sur le support (106) ;
dans lequel au moins une plaque de fibrociment (192) est conçue pour recevoir un matériau en vrac (195) ;
dans lequel le support (106) est supporté par des montants (190) par rapport à un support (191) ;
dans lequel le support (106) est fixé sur la plaque en fibrociment (192) par l'intermédiaire des montants (190) en plaçant la plaque en fibrociment (192) sur une base (193) des montants (190) ;
dans lequel les montants (190) sont constitués de deux tubes ronds emboîtés l'un dans l'autre ;
le procédé présente également une liaison par liaison de forme entre les tubes ronds emboîtés l'un dans l'autre à l'aide d'une boudineuse à tubes, de sorte que les montant (190) peuvent transmettre des forces de traction et de compression dans la sens longitudinale.
